(19)

Europäisches
Patentamt
European
Patent Office
Office européen
des brevets

(11) **EP 2 302 535 A1**

(12) **EUROPEAN PATENT APPLICATION**

(43) Date of publication:
**30.03.2011 Bulletin 2011/13**

(51) Int Cl.:
***G06F 17/30*** *(2006.01)*

(21) Application number: **09290742.7**

(22) Date of filing: **29.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Alcatel Lucent**
**75008 Paris (FR)**

(72) Inventors:
• **Whelan, Martin**
  **3754 Doreen (AU)**

• **Wang, Daping**
  **3129 Box Hill North (AU)**
• **Alleman, John**
  **3163 Murrumbeana (AU)**

(74) Representative: **Zinsinger, Norbert et al**
**Louis Pöhlau Lohrentz,**
**P.O. Box 30 55**
**90014 Nürnberg (DE)**

(54) **Method of controlling use of a web cache**

(57) The invention concerns a method of controlling use of a web cache (7), as well as a policy engine (1) and a computer program product to execute this method. A request message comprising a request for a web content specified by a web address is received and analysed for identification of a user having initiated the request. A data base (5, 6) storing priority-related data associated with the user is accessed and a priority assigned to the user is determined. A service level is assigned to the request dependent on the determined priority of the user. The requested web content is retrieved and provided to the requesting user whereby the extent of using the web cache (7) for the retrieval and provisioning of the requested web content depends on the service level assigned to the request.

FIG.1

EP 2 302 535 A1

**Description**

The present invention relates to a method of controlling use of a web cache, and a policy engine and a computer program product to execute said method.

Web cache is widely used to localise traffic associated with internet access as well as to accelerate the efficiency of internet access. Thus web cache reduces transmission cost and the amount of time required to download web content. Web cache solutions are manifold. A web browser application running on a PC may use a PC cache to locally store web files of a web site visited by a user of the PC so that the web files, when the user re-visits this web site, can be retrieved faster from the PC cache than from the web site server (PC = Personal Computer).

Other solutions make use of a cache-aware router (e.g. a WCCP-based router) to manage and control the web access of a plurality of users. This router may run under the well-known Web Cache Control Protocol (= WCCP) and operate as follows: If a user requests a web page from a browser, the cache-aware router receives the request and determines if the request should be directed to a cache engine. The router looks for TCP as the protocol field in the IP header and for 80 as the destination port in the TCP header (IP = Internet Protocol; TCP = Transmission Control Protocol). If a packet meets these criteria, the router transparently redirects the packet to the cache engine where the requested content may be cached and retrievable. If the cache engine has not already cached the requested content, it retrieves the content from the web page server on the internet. The content returns to and is stored on the cache engine from where the requested content is made available to the user. Later, if the same content is requested again, it can be directly downloaded from the cache engine. An advantage of transparent re-routing of web content requests is that users need not configure their browsers to use a web proxy.

However with more and more bandwidth-demanding applications running via the internet, there is an urgent need to control use of the available web cache resources.

It is an object of the present invention to provide a control of a use of a web cache.

A first object of the present invention is achieved by a method of controlling use of a web cache, the method comprising the steps of receiving a request message comprising a request for a web content specified by a web address; analysing the request message for identification of a user having initiated the request; accessing a data base storing priority-related data associated with the user and determining a priority assigned to the user; assigning a service level to the request dependent on the determined priority of the user; and retrieving the requested web content and providing the web content to the requesting user whereby the extent of using the web cache for the retrieval and provisioning of the requested web content depends on the service level assigned to the request. A second object of the present invention is achieved by a policy engine for controlling use of a web cache, comprising a control unit adapted to analyse a received request message comprising a request for a web content specified by a web address, for identification of a user having initiated the request, access a data base storing priority-related data associated with the user and determine a priority assigned to the user, and assign a service level to the request dependent on the determined priority of the user, whereby the extent of using the web cache for a retrieval and provisioning of the requested web content depends on the service level assigned to the request. A third object of the present invention is achieved by computer program product for controlling use of a web cache, whereby the computer program product, when executed by a policy engine, performs the steps of: analysing a received request message comprising a request for a web content specified by a web address, for identification of a user having initiated the request, initiating an access of a data base storing priority-related data associated with the user and determining a priority assigned to the user, and assigning a service level to the request dependent on the determined priority of the user, whereby the extent of using the web cache for a retrieval and provisioning of the requested web content depends on the service level assigned to the request.

The invention can be implemented in an IP-based telecommunication network. Controlling use of the web cache means managing, administrating and controlling an extent of how much the web cache available in the telecommunication network is used and utilised. A web cache is a storage unit used for web caching, i.e. the caching of web documents (e.g., HTML (= Hypertext Markup Language) pages, images), to reduce bandwidth usage, server load, and perceived lag. A web cache stores copies of documents passing through it; subsequent requests may be satisfied directly from the web cache.

Unlike conventional web cache control systems where a web caching management only depends on a target of a web content request, e.g. identified by a web address or a web URL (= Uniform Resource Locator), embodiments of the present invention also take into account, for a management of the web caching, a source (e.g. a terminal) from where a web content request message originates and/or a subscriber/user who has initiated a web content request.

While it is admitted that a conventional WCCP-based router helps to localise traffic, without information from the end user side its caching strategy can only be driven by statistics reports or arbitrary judgment of certain service's popularity. This situation is significantly improved by embodiments of the present invention because with access to a user subscription, the router can prioritise the caching needs for different websites, applications and hence meet different on-line user's need. In this sense the present solution provides that web caching can be configured on a per user basis and thus to optimise the user's on-line experience.

In contrast to conventional web cache solutions, the presently described solution provides an interaction with customer subscription, provides a flexible charging strategy, and is configurable on a per user basis.

If installed in co-operation with an access network edge router, the present web cache control system provides an access network provider a way to better deliver web services and hence to retain subscribers in their network. Therefore, the present system can also provide the end user with a personalised web access QoE (= Quality of Experience).

The present system resolves problems under following scenarios: a) Cooperation between a telecommunications network provider and a content provider. When a telecommunications network provider is looking for a way out of simply being a pipeline provider, they need new applications to attract or retain subscribers. At the same time, application providers are trying all the best to distinguish themselves from competitors. A cooperation between a telecommunications network provider and an application provider requires the telecommunications network provider to give a certain kind of QoS guarantee to the application provider (QoS = Quality of Service). Since it is very hard to implement an end-to-end QoS strategy, keeping important data (e.g. flash cache, web cache) locally comes to the play. Hence embodiments of the present invention provide a capability for a combination of a content provider and a telecommunications network provider to provide a differential service based on QoS. b) The usage pattern of internet is like a star network, where most visits are around popular websites, e.g. google.com. The present invention reflects this pattern in different user's preferences when prioritising web accesses. There are users who like to pay a premium in order to get a fast access to a first website while others might want to get the best of a second website. The present invention provides access network providers (e.g. a telecommunications network provider) with the possibility to treat different people differently according to what web content they want to visit on the internet. Under these aspects, embodiments of the present invention provide a web caching management system which can help to retain subscribers to a telecommunications network provider offering the web caching management system to their customers. Further, embodiments of the present invention enable a telecommunications network provider to compete with internet application providers and to offer a specific QoS to their customers.

The present invention does not introduce a routing decision but an enhanced caching mechanism to reduce network traffic. The present invention provides a user with a better web access service for subscribed websites. The present invention provides a web control system which is easily configurable. Embodiments of the invention provide a user with a capability to tailor internet access expense according to the user's individual needs.

The policy engine can be regarded at least as a component of a web cache control system provided by the present invention. Embodiments of the present invention represent a content-aware web cache control, i.e. where the policy engine is able to do deep packet inspection and distinguish different application types, e.g. flash stream, images. Embodiments of the present invention represent a subscription-driven web cache control, i.e. the policy engine has an interface with a subscriber service centre in order to retrieve resource requestor's information. Embodiments of the present invention put into effect a policy-based web cache or represent a policy-driven web cache control, i.e. the policy engine facilitates an implementation of an operator's web cache strategy.

Further advantages are achieved by embodiments of the invention indicated by the dependent claims.

According to an embodiment of the invention, the request message is tagged with a tag according to the service level assigned to the request, the request message is routed according to the tag, and the request is fulfilled by using resources, in particular web cache resources, available within a part of the telecommunications network where the message has been routed to. The part of the telecommunications network where the message has been routed to may be a physical or a virtual part of the telecommunications network, e.g. a real sub-network of the telecommunications network associated with the tag or a virtual sub-network of the telecommunications network associated with the tag such as a VLAN. The tag may be a tag or a label according to any tagging or labelling mechanism, respectively, e.g. a VLAN tag or a MPLS label (VLAN = Virtual Local Area Network; MPLS = Multi Protocol Label Switching). The policy engine, in particular the control unit of the policy engine, may tag the request message with a tag according to the service level assigned to the request. The cache-aware router routes the request message according to the tag. The request is then handled in the telecommunication network, in particular the internet, by using the resources, in particular the web cache resources, available within a part of the network where the message has been routed to. For instance, it is possible that the request message is tagged with a VLAN tag according to the service level assigned to the request, the request message is routed to a VLAN according to the VLAN tag, and the request is fulfilled by using the resources, in particular the web cache resources, available within said VLAN.

According to an embodiment of the invention, the policy engine in particular the control unit of the policy engine, also takes into account one or more of the following data when assigning a service level to the request: the web address (e.g. URL) specifying the requested web content, in particular its location (e.g. web site, web page), a data type of the requested web content (text, image, video, audio), and a caching policy of a service provider, in particular of an operator of the web cache.

According to another embodiment of the invention, the steps of accessing a data base storing priority-related data associated with the user and determining a priority assigned to the user comprise the steps of: accessing, preferably by the policy engine, one or more data bases storing subscription-related data and/or data which specify one or more URLs subscribed by the user; determining, preferably by the policy engine, a type of service to which the user subscribes and/or one or more web addresses to which the user subscribes; and determining, preferably by the policy engine, the priority assigned to the user based on the determined type of service and/or the one or more subscribed web addresses.

The data base storing priority-related data associated with the user may include a subscription data base storing subscription-related data and/or a URL management data base storing data which specify one or more URLs subscribed by the user. It is possible that the user subscribes to one of a plurality of service levels associated with different QoS regarding web access. The plurality of service levels may be offered to the user by an operator of the access network. It is also possible that the user subscribes to one or more specific web addresses associated with web sites offering web content favoured by the user. These one or more specific web addresses may be stored in a URL data base, e.g. managed by an operator of the access network. It is possible that the user has subscribed to a service level which enables him to access a user account of the URL data base and modify, at least partly, the list of subscribed web addresses. It is possible that the policy engine has an interface to a Subscriber Service Control (= SSC) and is able to orchestrate subscription information and target URL. It is possible that the URL information is stored either in an existing subscription data base table or a dedicated URL data base.

According to another embodiment of the invention, the step of determining a priority assigned to the user comprises the step of classifying the user to one of following classes: subscribers with a basic web access, subscribers with a premium web access, and subscribers with an individually arranged web access. The data which define to which class the user is classified may include: the priority-related data associated with the user, and the web address specifying the web content. It is possible that the user is classified to one of at least two classes associated with a different QoS regarding web access.

According to an embodiment of the invention, if the user has been classified to the class of subscribers with a basic web access, the request for the web content is fulfilled without use of the web cache. According to an embodiment of the invention, if the user has been classified to the class of subscribers with a premium web access, and if the web address of the requested web content is contained in a set of web addresses predefined by a service operator, the request for the web content is fulfilled using the web cache. According to an embodiment of the invention, if the user has been classified to the class of subscribers with an individually arranged web access, and if the web address of the requested web content is contained in a set of web addresses individually arranged by the user, the request for the web content is fulfilled using the web cache.

In an embodiment, the policy engine executes a service policy defined as follows: a) the request is mapped to a service level SL_0 associated with a service package SP_0 providing a basic web access if the user belongs to the class of subscribers with a basic web access, b) the request is mapped to a service level SL_1 associated with a service package SP_1 providing a premium web access, if the user belongs to the class of subscribers with a premium web access and if the user requests web content specified by a web address contained in a web address set {URL_11, URL_12, URL_13, ..., URL_1i} specified for the service package SP_1, wherein i = 1, 2, 3, etc., and c) the request is mapped to a service level SL_k associated with a service package SP_k providing an individually arranged web access, if the user belongs to the class of subscribers with an individually arranged web access and if the user requests web content specified by a web address contained in a web address set {URL_k1, URL_k2, URL_k3, ..., URL_kj} specified for the service package SP_k, wherein k = 2, 3, 4, etc. and j = 1, 2, 3, etc.. In this context, the term "mapping" is meant to denote "linking with" or "providing an association between". The policy engine maps the request to the corresponding service levels SL_0, SL_1, or SL_k according to the service policy: the policy engine triggers a tagging of the request message received from the user with a tag corresponding to the service levels SL_0, SL_1, or SL_k. As mentioned above, the tag may be a tag or a label according to any tagging or labelling mechanism, respectively, e.g. a VLAN tag or a MPLS label. The cache-aware router routes the request message to the service levels SL_0, SL_1, or SL_k according to the tag. It is possible that the service levels SL_0, SL_1, and SL_k are represented by different virtual sub-networks of the telecommunication network, e.g. by different VLANs. Then, the request is fulfilled by using the resources, in particular the web cache resources, available within the said service levels corresponding to the tag.

For instance, the service levels SL_0, SL_1, and SL_k are represented by VLANs VLAN_0, VLAN_1, and VLAN_k. Then the policy engine maps the request to the corresponding VLAN_0, VLAN_1, or VLAN_k according to the service policy: the policy engine triggers a VLAN tagging of the request message received from the user with a VLAN tag corresponding to the VLANs VLAN_0, VLAN_1, or VLAN_k. The cache-aware router routes the request message to the VLANs VLAN_0, VLAN_1, or VLAN_k according to the VLAN tag. Then, the request is fulfilled by using the resources, in particular the web cache resources, available within the said VLAN corresponding to the VLAN tag.

According to another embodiment of the invention, the extent of using the web cache for the retrieval and provisioning of the requested web content also depends on time parameter values, e.g. the time of day and/or day of week.

According to an embodiment, the policy engine maps subscriber web access to different service levels, e.g. VLANs, and such mapping is based on one or more of:

1. Service provider default web caching policy. For example, certain website visit will use the cache engine for all subscribers.
2. Target URL or IP address. For example, only a limited set of websites are cached in the service provider's cache engine.
3. End user subscription for certain URL visit. For example, the service provider can charge a premium rate to use the web cache for some websites.
4. Time of day, day of week, etc.

According to an embodiment of the invention, the policy engine is implemented at an edge router, in particular at an access network edge router. The policy engine may be a hardware module or a software module or a combination of both. The policy engine may be an add-on module which is added to, e.g. integrated into, the edge router or a stand-alone device connected to the edge router. It is possible that the policy engine is implemented as a software add-on which is added to the existing software running on the edge router. The policy engine may be a logic element that can either run on a separate box or be embedded in an edge router.

According to an embodiment of the invention, the policy engine is adapted to access, via an interface, a subscription data base storing subscription-related data and/or a URL management data base storing data which specify one or more URLs subscribed by the user, determine a type of service to which the user subscribes and/or one or more web addresses to which the user subscribes, and determine the priority assigned to the user based on the determined type of service and/or the one or more subscribed web addresses.

These as well as further features and advantages of the invention will be better appreciated by reading the following detailed description of exemplary embodiments taken in conjunction with accompanying drawings of which:

Fig. 1     is a block diagram of a web cache control system according to an embodiment of the invention;

Fig. 2     is a work flow diagram of a web cache control according to an embodiment of the invention;

Fig. 3     is a first part of a work flow diagram of a web cache control according to another embodiment of the invention; and

Fig. 4     is a second part of a work flow diagram of a web cache control according to another embodiment of the invention.

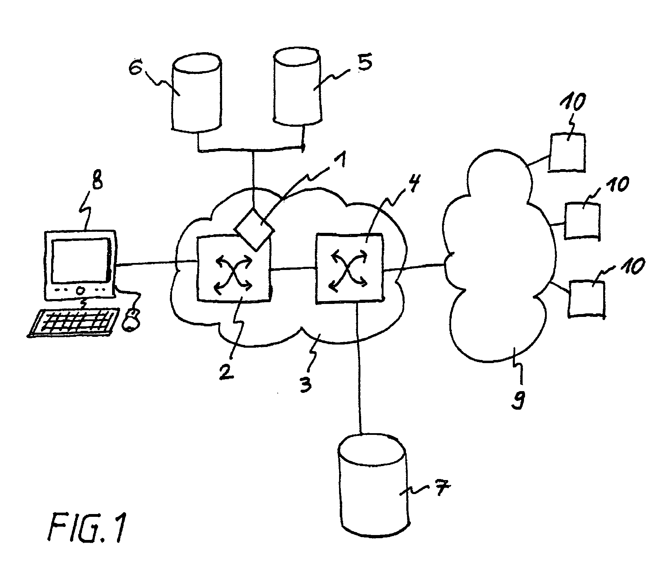

Fig. 1 schematically illustrates a telecommunication network comprising an access network 3 and the internet 9. The access network 3 comprises an access network edge router 2 and a cache-aware router 4. The internet 9 comprises a plurality of web content servers 10. The cache-aware router 4 is connected with a web cache 7 and the internet 9. The access network edge router 2 comprises a policy engine 1 which has an interface to a subscription database 5 and a URL database 6. In addition, the access network edge router 2 has an interface connection with a user terminal 8. The access network 3 provides a user of the user terminal 8 with an access to the internet 9 so that the user can download web content stored on or provided by the web content servers 10 to the user terminal 8.

The access network 3 may be a wire-line telecommunications network such as a PSTN or an ISDN or a wireless telecommunications network such as a GPRS or a UMTS-based network (PSTN = Public Switched Telephone Network; ISDN = Integrated Services Digital Network; GPRS = General Packet Radio Service; UMTS = Universal Mobile Telecommunication System). The user terminal 8 may be a wire-line terminal such as a personal computer or a wireless terminal such as a laptop, a mobile phone. The subscription database 5 may comprise or have access to a subscriber service control (= SSC) module. The URL database 6 may be a URL management database.

The policy engine 1 comprises a control unit adapted to orchestrate the subscription information received from the subscription database 5 and URL related retreat from URL database 6. The policy engine 1 may be integrated into the access network edge router 2 or a stand-alone device. It is possible that the policy engine 1 is implemented as an add-on module which is added to the existing component of the access network edge router 2 or that it is implemented as a software add-on which is added to the existing software running on the access network edge router 2.

The policy engine 1 may be composed of one or several inter-linked computers, i.e., a hardware platform, a software platform basing on the hardware platform and several application programs executed by the system platform formed by the software and hardware platform. The functionality of the policy engine 1 may be provided by the execution of these application programs. The application programs or a selected part of these application programs may constitute a computer software product providing a web cache control service as described in the following, when executed on the system platform. Further, such computer software product is constituted by a storage medium storing these application programs or said selected part of application programs.

The web cache 7 comprises one or more RAM storage devices for the caching of web documents e.g. HTML pages, images, video files (RAM = Random Access Memory). The web cache 7 may be implemented as a web cache server. Further, the web cache 7 may comprise a cache engine to provide cache content to a router or multiple routers or a cache engine cluster, i.e. a series of cache engines.

The policy engine 1 may comprise a communication module to access the subscription data base 5, and a communication module to access the URL data base 6. The policy engine 1, the communication module to access the subscription data base 5, the communication module to access the URL data base 6, and the cache-aware router 4 (with cache server 7) may be components of a policy driven web cache system.

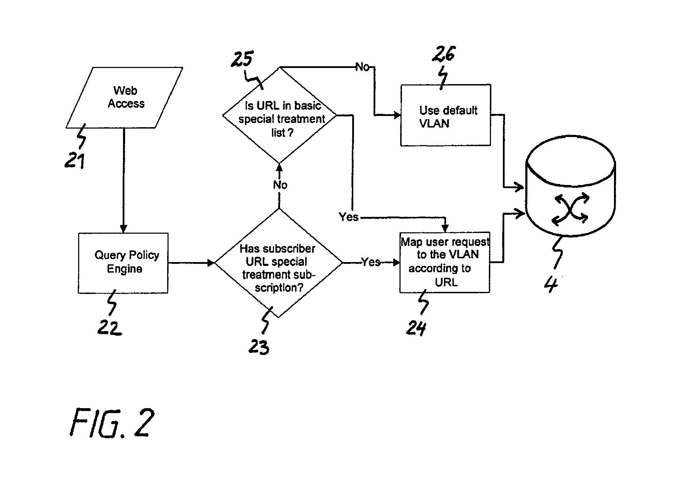

Fig. 2 is a work flow diagram for an embodiment of the invention. On a cache-aware router 4, the following access-list policy is defined:

$$\textsf{VLAN\_x -> Package\_x (URL\_x1, URL\_x2, ..., URL\_xi), where x is in (0, ...L, L+1, ... M, M+1, ...N).}$$

On an access network edge router, the following policy is defined:

1. Subscribers with basic access only -> VLAN_x, x = 0, ..., L
2. Subscribers with premium access -> VLAN_y, y = L+1, ... , M
3. Subscribers with individual package and visiting URLs within package_z will use VLAN_z, z = M+1, ... , N.

The arrows -> are meant to denote an association or a mapping.

In a first step 21, a user of the user terminal 8 applies for a web access by initiating a request for a web content by means of a browser application running on the user terminal 8. For example, a user inputs into his user device 8 a web address, e.g. a URL, associated to or specifying a web content. The user terminal 8 receives this web address and uses it to generate a request message which is sent to the access network 3. The request message is received by the access network edge router 2 of the access network 3 and forwarded to the policy engine 1. The policy engine 1 analyses the received request message, as is indicated by step 22 of Fig. 2. From the request message, the policy engine 1 retrieves data (e.g. a user name, an IP address, a telephone number) which allow an identification of the user who has initiated the request or the user terminal 8 from where the request message originates. This identification data may be contained in an IP packet representing the request message.

In case of several users using the same terminal 8, the user identification may also comprise information which allows to identify a specific user, e.g. a user name. After identification of the initiator of the request message, the policy engine 1 accesses the subscription database 5 to determine priority related data associated with the user. The policy engine 1 determines, by means of this priority related data, a priority, e.g. a service level, assigned to the user. This is illustrated in steps 23 and 25 of Fig. 2.

In a first step 23, the policy engine 1 determines whether the user has a URL special treatment subscription. This may be the case if the user has subscribed to a class of subscribers with an individually arranged web access. This service level may allow users to define an individually chosen set of web addresses which the user wants to visit with a high quality of service. If this is the case, the policy engine 1 is guided to the step 24 of Fig. 2 and the policy engine 1 maps the user request message to a VLAN according to the URL contained in the request message. This mapping may be performed by adding a VLAN tag to the request message. Then the policy engine 1 triggers the access network edge router 2 to forward the VLAN-tagged request message to the cache aware router 4.

In the other case, i.e. if the subscriber has no URL special treatment subscription, the policy engine 1 is guided to step 25 of Fig. 2 and determines by means of the URL database 6 whether the URL contained in the request message is included in a basic special treatment list which is stored in the URL database 6. If this is the case, this means that the user subscribes to a premium web access for a set of one or more websites. Then the user request is mapped to a VLAN according to the URL contained in the request message and the VLAN-tagged request message is forwarded to the cache aware router 4.

In the other case, i.e. if the URL is not in a basic special treatment list, the policy engine 1 is guided to step 26 of Fig. 2, and the user request message is tagged with a VLAN tag corresponding to a default VLAN. After that, the request message is forwarded to the cache-aware router 4.

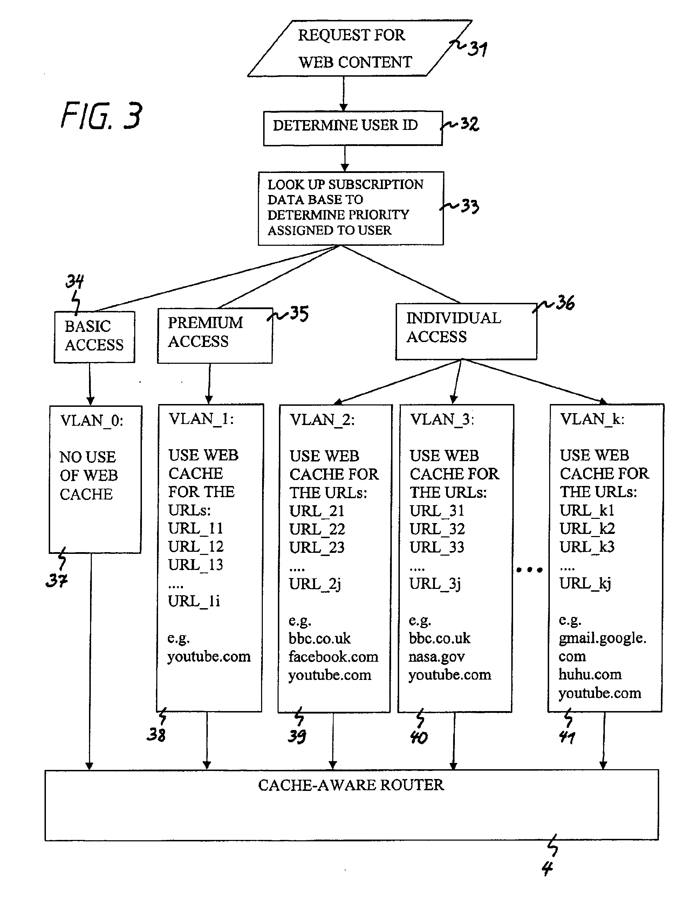

Fig. 3 shows a first part of a work flow diagram for another embodiment of the invention. After receiving 31 a request for a web content from a user terminal 8, the policy engine 1 analyses the request message to determine 32 a user ID. Having determined 32 the user ID, the policy engine 1 accesses 33 the subscription database 5 to determine a priority assigned to the user by means of the user ID. The user priority may be a basic web access 34, a premium web access 35, or an individually arranged web access 36. If the user has subscribed to the basic access 34 (= package 0), his request message is tagged with a VLAN tag VLAN_0. For the further processing of the request message tagged with VLAN_0, the web cache 7 is not used. In case the user has subscribed to the premium access 35 (= package 1), the request message is tagged with a VLAN tag VLAN_1. This means that the web cache 7 is used for the URLs URL_11, URL_12, URL_13, ..., URL_1i. The premium access 36 may be booked by a user who is interested in a fast web access to a popular website such as youtube.com.

In case the user has booked an individual access to the internet, there is a plurality of different VLANs corresponding to the plurality of subscriptions of different users. A request message of a first user with individual access 36 may be tagged with a VLAN tag VLAN_2, which provides that the web cache 7 is used for the URLs URL_21, URL_22, URL_23, ..., URL_2j (= package 2). For example, this user may have booked a fast access to the following set of individually chosen websites: bbc.co.uk, facebook.com, and youtube.com. Another user who has booked individual access 36 to the internet may be associated with a VLAN tag VLAN_3 which ensures that the web cache 7 is used for the following URLs URL_31, URL_32, URL_33, ..., URL_3j (= package 3). For example, this may comprise the following websites: bbc.co.uk, nasa.gov, youtube.com. Fig. 3 shows a plurality of k different users having booked individual access 36 wherein the k-th user sends a request message which is tagged with a VLAN tag VLAN_k, which provides that a web cache is used for the URLs: URL_k1, URL_k2, URL_k3, ..., URL_kj (= package k). Among these URLs may be the following website addresses: gmail.google.com, huhu.com, youtube.com. After the request message has been tagged with a VLAN tag 37-41, the request message is forwarded to the cache aware router 4.

On the cache-aware router (e.g. WCCP based), cache access is based on VLAN tagging: VLAN_x -> Package_x (URL_x1, URL_x2, ..., URL_xi). When a subscriber visits the web (= web content request), the policy engine 1 retrieves a package information from the subscription database 5 to decide to which package the target URL (i.e. the URL specifying the requested web content) belongs. From the definition of the packages given above (i.e. VLAN_x -> Package_x (URL_x1, URL_x2, ..., URL_xi)), it is obvious that there will always be a match. Therefore, a proper VLAN can be applied to the web request. The arrows -> are meant to denote an association or a mapping.

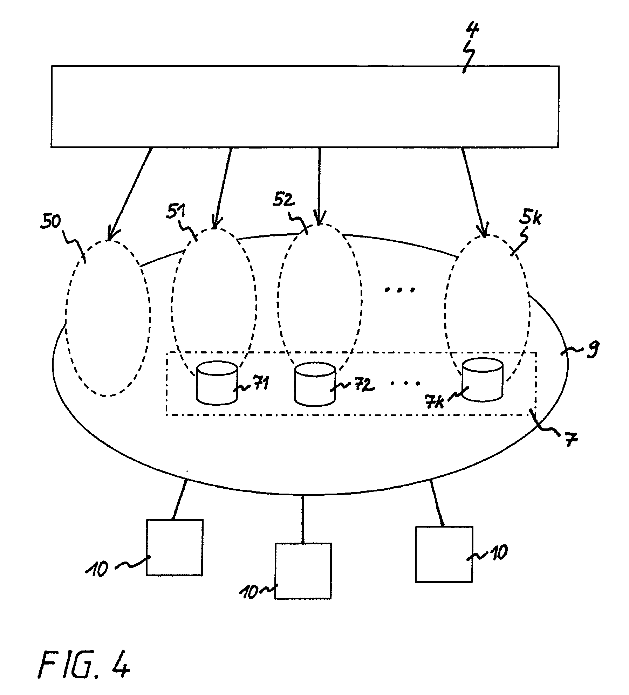

In Fig. 3, the three dots ("dot dot dot") between the rectangle 40 and the rectangle 41 is to interpreted as an ellipsis and meant to indicate that there may be a plurality of other rectangles, corresponding to other VLANs in between, which are left out for the reason of lacking space. The same applies to the sets of three dots in Fig. 4.

Fig. 4 shows a second part of a work flow diagram for another embodiment of the invention and is to be seen as a continuation of the work flow diagram shown in Fig. 3. Fig. 4 systematically illustrates how the requested web content is retrieved and provided to the requesting user whereby the extent of using the web cache 7 for the retrieval and provisioning of the requested web content depends on the service level assigned to the request. The content of Fig. 4 has to be seen with relation to the content of Fig. 3. Fig. 4 shows the cache-aware router 4, the internet 9 comprising a plurality of different VLANs 50, 51, 52, ... , 5k and the web cache 7 comprising a set of different web cache regions or web cache components 71, 72, 73, ... , 7k. A plurality of web content servers 10 are connected to the internet 9.

Referring to Fig. 3, if the user's request message has been tagged with a VLAN_0 tag 37, the cache aware router 4 routes the corresponding request message to the VLAN_0 50 where no web cache 7 is used for the retrieval and provisioning of the web content to the user. This corresponds to a default HTTP traffic performed via the internet without use of a web cache. If the user's request message has been tagged with the VLAN_1 tag 38, the cache aware router 4 routes the corresponding request message to the VLAN_1 51 which has access to the web cache component 71 of the web cache 7. The component 71 of the web cache 7 contains a cached web content of the URLs URL_11, URL_12, URL_13, ..., URL_1i, e.g. of the website youtube.com.

If the user's request message has been mapped to one of the VLANs VLAN_2, VLAN_3, ..., VLAN_k 39-41, the cache aware router 4 routes the corresponding request message to the corresponding VLANs 52, ..., 5k which have access to the web cache components 72, ... , 7k, respectively. The web cache component 72 may comprise the cached web content of the URLs URL_21, URL_22, URL_23, ..., URL_2j, e.g. of the websites bbc.co.uk, facebook.com, and youtube.com, as has been described with regard to Fig. 3.

The web content in the web cache components 71 to 7k may be regularly updated on a preset time schedule or dependent on user requests. Request messages which have been mapped to the default VLAN VLAN_0 have to be retrieved from the corresponding web content servers 10 without use of the web cache 7. Therefore, the use of the web cache 7 is controlled by the priority assigned to the user, i.e. the service level assigned to the request contained in the request messages.

**Claims**

1. A method of controlling use of a web cache (7), the method comprising the steps of:

   receiving a request message comprising a request for a web content specified by a web address;
   analysing the request message for identification of a user having initiated the request;
   accessing a data base (5, 6) storing priority-related data associated with the user and determining a priority assigned to the user;
   assigning a service level to the request dependent on the determined priority of the user; and

retrieving the requested web content and providing the web content to the requesting user whereby the extent of using the web cache for the retrieval and provisioning of the requested web content depends on the service level assigned to the request.

2. The method of claim 1,
**characterised in**
**that** the method further comprises the steps of:

tagging the request message with a tag according to the service level assigned to the request; and
routing the request message according to the tag and fulfilling the request by using the resources, in particular the web cache resources, available within said service level.

3. The method of claim 1,
**characterised in**
**that** the method further comprises the steps of:

for assigning a service level to the request, taking also into account one or more of: the web address specifying the requested web content, a data type of the requested web content, and a caching policy of a service provider, in particular of an operator of the web cache (7).

4. The method of claim 1,
**characterised in**
**that** the steps of accessing a data base (5, 6) storing priority-related data associated with the user and determining a priority assigned to the user comprise the steps of:

accessing one or more data bases (5, 6) storing subscription-related data and/or data which specify one or more URLs subscribed by the user;
determining a type of service to which the user subscribes and/or one or more web addresses to which the user subscribes;
determining the priority assigned to the user based on the determined type of service and/or the one or more subscribed web addresses.

5. The method of claim 1,
**characterised in**
**that** determining a priority assigned to the user comprises the step of:

classifying the user to one of following classes: subscribers with a basic web access (34), subscribers with a premium web access (35), and subscribers with an individually arranged web access (36).

6. The method of claim 5,
**characterised in**
**that** the method further comprises the steps of:

if the user has been classified to the class of subscribers with

a) a basic web access (34), fulfilling the request without using the web cache (7);
b) a premium web access (35), and if the web address of the requested web content is contained in a set of web addresses predefined by a service operator, using the web cache (7) for fulfilling the request;
c) an individually arranged web access (36), and if the web address of the requested web content is contained in a set of web addresses individually arranged by the user, using the web cache (7) for fulfilling the request.

7. The method of claim 5,
**characterised in**
**that** the method further comprises the steps of:

defining a service policy whereby

a) the request is mapped to a service level SL_0 associated with a service package SP_0 providing a basic web access, if the user belongs to the class of subscribers with a basic web access (34),

b) the request is mapped to a service level SL_1 associated with a service package SP_1 providing a premium web access, if the user belongs to the class of subscribers with a premium web access (35) and if the user requests web content specified by a web address contained in a web address set {URL_11, URL_12, URL_13, ..., URL_1i} specified for the service package SP_1, wherein i = 1, 2, 3, etc., and

c) the request is mapped to a service level SL_k associated with a service package SP_k providing an individually arranged web access, if the user belongs to the class of subscribers with an individually arranged web access (36) and if the user requests web content specified by a web address contained in a web address set {URL_k1, URL_k2, URL_k3, ..., URL_kj} specified for the service package SP_k, wherein k = 2, 3, 4, etc. and j = 1, 2, 3, etc.;

mapping the request to the corresponding service levels SL_0, SL_1, or SL_k according to the service policy;

tagging the request message received from the user with a tag corresponding to one of the service levels SL_0, SL_1, or SL_k in accordance with the mapping of the request; and

routing the request message according to the tag and fulfilling the request by using the resources, in particular the web cache resources, available within the said corresponding service level SL_0, SL_1, or SL_k.

8. The method of claim 1,
**characterised in**
**that** the extent of using the web cache (7) for the retrieval and provisioning of the requested web content also depends on time parameter values.

9. A policy engine (1) of a network (3), in particular of an access network, comprising a control unit adapted to analyse a received request message comprising a request for a web content specified by a web address, for identification of a user having initiated the request, access a data base (5, 6) storing priority-related data associated with the user, determine a priority assigned to the user, and assign a service level to the request dependent on the determined priority of the user, whereby the extent of using the web cache for a retrieval and provisioning of the requested web content depends on the service level assigned to the request.

10. The policy engine (1) of claim 9,
**characterised in**
**that** the policy engine (1) is implemented at an edge router (2), in particular an access network edge router.

11. The policy engine (1) of claim 9,
**characterised in**
**that** the policy engine (1) is adapted to access, via an interface, a subscription data base (5) storing subscription-related data and/or a URL management data base (6) storing data which specify one or more URLs subscribed by the user, determine a type of service to which the user subscribes and/or one or more web addresses to which the user subscribes, and determine the priority assigned to the user based on the determined type of service and/or the one or more subscribed web addresses.

12. A computer program product for controlling use of a web cache (7), whereby the computer program product, when executed by a policy engine (1), performs the steps of:

analysing a received request message comprising a request for a web content specified by a web address, for identification of a user having initiated the request,

initiating an access of a data base (5, 6) storing priority-related data associated with the user and determining a priority assigned to the user, and

assigning a service level to the request dependent on the determined priority of the user, whereby the extent of using the web cache (7) for a retrieval and provisioning of the requested web content depends on the service level assigned to the request.

FIG.1

*25*

*26*

No

Web
Access

Is URL in basic
special treatment
list ?

Use default
VLAN

*21*

No

*4*

Query Policy
Engine

Has subscriber
URL special
treatment sub-
scription?

Yes

Map user request
to the VLAN
according to
URL

Yes

*22*

*24*

*23*

# FIG. 2

## FIG. 3

```
        ┌─────────────────────┐
        │ REQUEST FOR         │  ~31
        │ WEB CONTENT         │
        └─────────────────────┘
                  │
                  ▼
        ┌─────────────────────┐
        │ DETERMINE USER ID   │  ~32
        └─────────────────────┘
                  │
                  ▼
   ┌──────────────────────────────┐
   │ LOOK UP SUBSCRIPTION         │
   │ DATA BASE TO                 │  ~33
   │ DETERMINE PRIORITY           │
   │ ASSIGNED TO USER             │
   └──────────────────────────────┘
```

34

| BASIC ACCESS | PREMIUM ACCESS ~35 | INDIVIDUAL ACCESS ~36 |
|---|---|---|

| VLAN_0: | VLAN_1: | VLAN_2: | VLAN_3: | VLAN_k: |
|---|---|---|---|---|
| NO USE OF WEB CACHE | USE WEB CACHE FOR THE URLs: URL_11 URL_12 URL_13 .... URL_1i  e.g. youtube.com | USE WEB CACHE FOR THE URLs: URL_21 URL_22 URL_23 .... URL_2j  e.g. bbc.co.uk facebook.com youtube.com | USE WEB CACHE FOR THE URLs: URL_31 URL_32 URL_33 .... URL_3j  e.g. bbc.co.uk nasa.gov youtube.com | USE WEB CACHE FOR THE URLs: URL_k1 URL_k2 URL_k3 .... URL_kj  e.g. gmail.google.com huhu.com youtube.com |

37   38   39   40   41

**CACHE-AWARE ROUTER**

4

FIG. 4

Europäisches
Patentamt

European
Patent Office

Office européen
des brevets

# EUROPEAN SEARCH REPORT

**Application Number**

EP 09 29 0742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU J ET AL: "QoS Differentiation in Switching-based Web Caching" INTERNATIONAL CONFERENCE ON PERFORMANCE, COMPUTING, AND COMMUNICATIONS, 15 April 2004 (2004-04-15), - 2017 pages 453-460, XP010770100 Phoenix, AZ, USA ISBN: 978-0-7803-8396-8 * abstract * * page 453, right-hand column, paragraph 2 * * section 3 "Switching-based Differentiated Service-Caching" * ----- | 1-12 | INV. G06F17/30 |
| A | WO 98/42102 A (CROSSKEYS SYSTEMS CORP [CA]; FORGET LEO [CA]; CHRISTMAS MARK [CA]) 24 September 1998 (1998-09-24) * abstract * ----- | 1,4,9, 11,12 | |
| A | WOOD S ET AL: "Network Quality of Service for the Enterprise: A Broad Overview" INFORMATION SYSTEMS FRONTIERS, [Online] vol. 4, no. 1, April 2002 (2002-04), pages 63-84, XP002560690 Netherlands ISSN: 1387-3326 Retrieved from the Internet: URL:http://www.springerlink.com/content/5vw08j3rfjrbdnth/fulltext.pdf> [retrieved on 2009-12-16] * the whole document * ----- | 1,9,12 | TECHNICAL FIELDS SEARCHED (IPC) G06F |

The present search report has been drawn up for all claims

| Place of search | Date of completion of the search | Examiner |
|---|---|---|
| Berlin | 16 December 2009 | Barieux, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 29 0742

This annex lists the patent family members relating to the patent documents cited in  the above-mentioned European search report.
The members are as contained in the European Patent Office EDP file on
The European Patent Office is in no way liable for these particulars which are merely given for the purpose of information.

16-12-2009

| Patent document cited in search report | | Publication date | Patent family member(s) | | Publication date |
|---|---|---|---|---|---|
| WO 9842102 | A | 24-09-1998 | AU | 6714498 A | 12-10-1998 |
| | | | EP | 0968588 A1 | 05-01-2000 |

EPO FORM P0459

For more details about this annex : see Official Journal of the European Patent Office, No. 12/82